# EUROPÄISCHE PATENTSCHRIFT

(11) **EP 3 837 072 B1**
(45) Veröffentlichungstag und Bekanntmachung des Hinweises auf die Patenterteilung: **10.06.2026**
(21) Anmeldenummer: 20700554.7
(22) Anmeldetag: 07.01.2020
(51) Int. Cl.: B23B 29/20

(54) **POSITIONIERVORRICHTUNG**
POSITIONING DEVICE
DISPOSITIF DE POSITIONNEMENT

(30) Priorität: 19.01.2019 DE 102019000383
(43) Veröffentlichungstag der Anmeldung: 23.06.2021
(73) Patentinhaber: Kolibri Beteiligungsgesellschaft mbH & Co. KGaA, 14532 Kleinmachnow (DE)
(72) Erfinder: GIESLER, Steffen, 72458 Albstadt (DE); EWALD, Marius, 72793 Pfullingen (DE)
(74) Vertreter: Bartels und Partner, Patentanwälte
(86) Internationale Anmeldenummer: PCT/EP2020/050216
(87) Internationale Veröffentlichungsnummer: WO 2020/148114

(56) Entgegenhaltungen:
- EP-A1- 1 992 435
- DE-A1- 102010 003 397
- DE-A1- 102010 022 435
- US-A1- 2011 023 276
- US-A1- 2013 043 634

## Beschreibung

Die Erfindung betrifft eine Positioniervorrichtung zum Positionieren eines Werkzeughalters an einem Werkzeugrevolver einer Werkzeugmaschine mit den Merkmalen im Oberbegriff von Anspruch 1.

Werkzeugrevolver mit einer schwenkbaren Werkzeugscheibe, die außenumfangsseitig eine Vielzahl von Arbeitsstationen aufweisen, an denen Werkzeughalter für Bearbeitungswerkzeuge in passgenauer Position festlegbar sind, sind in unterschiedlichen Ausgestaltungen Stand der Technik, vgl. beispielsweise DE 10 2005 033 890 A1 oder DE 10 2014 003 336 A1. Solche Werkzeugrevolver weisen üblicherweise einen mit der betreffenden Werkzeugmaschine verbindbaren Grundkörper auf, an dem die Werkzeugscheibe um eine Revolverachse drehbar gelagert ist, wobei die mit Werkzeughaltern bestückten Arbeitsstationen durch Drehen der Werkzeugscheibe in eine Arbeitsposition schwenkbar sind. Bei den Bearbeitungswerkzeugen, die in den Werkzeughaltern zum Einsatz kommen sollen, handelt es sich hauptsächlich um Werkzeuge zur spanabhebenden Bearbeitung, wie rotatorisch angetriebene Bohr- oder Drehwerkzeuge, oder um statische Werkzeuge, wie Drehmeißel. Bei bestimmten Fertigungsaufgaben, wie bei Werkstücken für die Fertigung von Kleinserien, ist ein häufiger Wechsel unterschiedlicher zum Einsatz kommender Bearbeitungswerkzeuge erforderlich, was zu einem erheblichen Arbeitsanfall für das Bedienpersonal führt. Um die dadurch bedingten hohen Bearbeitungskosten zu senken, geht die Bestrebung dahin, den Vorgang des Werkzeugwechsels maschinell zu unterstützen. Ein diesbezüglicher, nachveröffentlichter Stand der Technik ist in der Patentanmeldung DE 10 2018 004 677.0 offenbart. Bei dem dort gezeigten Werkzeugrevolver sind die Festlegeeinrichtungen, wie sie bei derartigen Werkzeugrevolvern üblicherweise zur Fixierung und Freigabe der Werkzeughalter an den oder von den Arbeitsstationen vorgesehen sind, maschinengesteuert betätigbar. Dies ermöglicht die Durchführung des Wechselvorgangs im automatischen Betrieb mittels eines Handhabungsroboters, der den freigegebenen Werkzeughalter abnimmt und einen anderen Werkzeughalter in der Arbeitsstation einsetzt. Bei voll automatisch durchgeführtem Werkzeugwechsel ist somit auch ein zumindest teilautomatisierter Betrieb der betreffenden Bearbeitungs-Gesamtanlage realisierbar, was eine Verringerung der Rüstkosten ermöglicht und zu einer entsprechenden Reduzierung von Arbeitszeit und Arbeitskosten führt.

Um eine hochgenaue Bearbeitung beim Einsatz der Werkzeugrevolver zu gewährleisten, ist es unerlässlich, dass die Positioniereinrichtung eine absolut passgenaue Position der an der betreffenden Arbeitsstation eingesetzten Werkzeughalter sicherstellt. Hieraus ergeben sich hohe Anforderungen an die Genauigkeit der Geometrie der Positionierstifte und der am Werkzeughalter für den Eingriff der Positionierstifte vorgesehenen Aufnahmen. Bei maschinell durchgeführtem Werkzeugwechsel bedingt dies wiederum für den an einem Roboterarm befindlichen Greifer das Einhalten engster Toleranzen bei der Steuerung der Lage des Greifers beim Einsetzvorgang. Um das sichere Einsetzen des ergriffenen Werkzeughalters zu gewährleisten, sind daher hohe Anforderungen sowohl an die Mechanik als auch an die Ansteuerung des betreffenden Handhabungsroboters zu stellen.

Die US 2011/0023276 A1 beschreibt eine Positioniervorrichtung zum Positionieren eines Werkzeughalters an einem Werkzeugrevolver einer Werkzeugmaschine mittels Positionierstiften, die am Werkzeugrevolver festgelegt sind und die bei auf dem Werkzeugrevolver aufgesetztem Werkzeughalter in Aufnahmen am Werkzeughalter eingreifen, wobei mindestens eine der Aufnahmen des Werkzeughalters aus einer Buchse gebildet ist, in die im aufgesetzten Zustand der zuordenbare Positionierstift unter Anlage mit der Innenumfangsfläche der Buchse eingreift, und dass die Innenumfangsfläche Teil eines Aufspreizteils ist, das bei Eingriff des Stifts sich von dem Stift weg elastisch rückfedernd aufweitet.

Weitere Positioniervorrichtungen gehen aus der EP 1 992 435 A1, der DE 10 2010 022 435 A1, der DE 10 2010 003 397 A1 und der US 2013/ 0043634 A1 hervor.

Im Hinblick auf diese Problematik stellt sich die Erfindung die Aufgabe, eine Positioniervorrichtung zur Verfügung zu stellen, die eine hochgenaue Positionierung betreffender Werkzeughalter gewährleistet und sich insbesondere für eine maschinelle Durchführung des Positioniervorgangs im Zuge von Werkzeugwechselvorgängen eignet.

Erfindungsgemäß ist diese Aufgabe durch eine Positioniervorrichtung gelöst, die die Merkmale des Patentanspruchs 1 in seiner Gesamtheit aufweist.

Gemäß dem Kennzeichen von Anspruch 1 ist vorgesehen, dass sowohl der Stift als auch die Buchse
- in dem Revolver bzw. in dem Halter durch jeweils eine Schraubverbindung festgelegt sind,
- einen durchgehenden Hohlkanal aufweisen, in dem eine Angriffsstelle für ein Betätigungswerkzeug angeordnet ist, und
- sich über ein ringförmiges Abstützteil außerhalb der Schraubverbindung an dem Revolver bzw. an dem Halter abstützen.

Die Festlegung mittels Verschrauben ermöglicht in Verbindung mit der im Hohlkanal ausgebildeten Angriffsstelle, mit Vorteil etwa in Form eines Innensechskants, die sichere Festlegung mit einem einfachen Montagevorgang, wobei gleichzeitig über die Lagebeziehung zwischen Abstützteil und Revolver bzw. Halter im Einschraubzustand die Einschraubtiefe von Stift und/oder Buchse vorgebbar ist.

Mindestens eine der Aufnahmen des Werkzeughalters ist aus einer Buchse gebildet, in die im aufgesetzten Zustand der zuordenbare Positionierstift unter Anlage mit der Innenumfangsfläche der Buchse eingreift, wobei die Innenumfangsfläche Teil eines Aufspreizteils ist, das bei Eingriff des Stiftes sich von dem Stift weg elastisch rückfedernd aufweitet. Beim Anfahren des Werkzeughalters an die betreffende Arbeitsstation durch den Greifer des betreffenden Handlingsystems erfolgt der Eingriff des jeweiligen Positionierstifts daher über eine Anlaufstelle an einem elastisch nachgiebigen Buchsenteil, sodass für Lagetoleranzen der Ansetzposition des Werkzeughalters ein Ausgleich zur Verfügung steht. Aufgrund der dadurch geringeren Anforderung an enge Lagetoleranzen des Greifers und entsprechend geringerer Anforderungen an Mechanik und Steuerung eines Handlingsystems, eignet sich die Positioniervorrichtung daher mit Vorteil für mit geringem Kostenaufwand und betriebssicher durchzuführende maschinelle Werkzeugwechselvorgänge.

Bei vorteilhaften Ausführungsbeispielen weist der Stift, soweit er aus dem Revolver herausragt, zumindest teilweise derart eine von der Innenumfangsfläche der Buchse verschiedene Außenumfangsfläche auf, dass im aufgesetzten Zustand nur teilweise eine Berührung, vorzugsweise in der Art einer Linienberührung, zwischen den Flächen zustande kommt. Die Vermeidung der vollflächigen Berührung mit der entsprechenden Verkleinerung der wirksamen Reibfläche führt zu einem günstigeren Verhältnis zwischen axialer Einziehkraft und der als Ausrichtkraft resultierenden Querkraft beim Einsetzvorgang.

Mit Vorteil kann die Anordnung so getroffen sein, dass die Außenumfangsfläche des Stiftes zumindest teilweise konvex oder konisch und die Innenumfangsfläche in der Buchse zumindest im Bereich der Berührung konisch bzw. konkav ausgeführt ist. Mit besonderem Vorteil kann diesbezüglich die Kombination aus ballig geschliffenem Positionierstift und einer Buchse mit Innenkonus vorgesehen sein.

Bei bevorzugten Ausführungsbeispielen erweitert sich der Innenumfang der Buchse im aufgesetzten Zustand in Richtung der Umgebung hin konisch, wobei das Aufspreizteil der Buchse außenumfangsseitig unter Beibehalten eines radialen Abstands von einer Ausnehmung im Halter umfasst ist, die von der Buchse durchgriffen ist. Mit ihrem Aufspreizteil bildet die Buchse dadurch für den Eingreifvorgang des Stifts eine Art Einfahrtrichter, dessen Wand wegen des radialen Abstands zur umfassenden Wand des Werkzeughalters aufweitbar ist.

Mit Vorteil weist der Halter, mit rechteckförmigem Querschnitt versehen, an seinen Eckbereichen jeweils eine Buchse auf, denen am Revolver passgenau an einer vorzugsweise normierten Schnittstelle vier Stifte zugeordnet sind, wobei der Halter und die Stifte einen Durchgriff für den Durchtritt einer Antriebswelle eines antreibbaren Bearbeitungswerkzeugs vorsehen, das mittels des Halters am Revolver festlegbar ist. Die so verteilte Anordnung von Passstellen gewährleistet die hochgenaue Ausrichtung sowohl in Richtung der Revolverachse als auch quer zu dieser, wobei gleichzeitig durch die vorgesehene Zusammenwirkung zwischen dem jeweiligen Stift und dem aufweitbaren Aufspreizteil der Buchse die üblicherweise bei mehreren Passstellen wegen statischer Überbestimmung auftretenden Probleme in Wegfall kommen.

Mit Vorteil kann die Anordnung so getroffen sein, dass mittels einer lösbaren Festlegeeinrichtung der Halter auch dann noch an dem Revolver verbleibt, wenn eine Kupplungsvorrichtung in dem Revolver für einen Werkzeugwechselvorgang diese den Halter freigegeben hat. Dies eröffnet die vorteilhafte Möglichkeit, bei automatisiert oder teilautomatisiert durchgeführten Werkzeugwechselvorgängen, bei denen, wie es in der einen nachveröffentlichten Stand der Technik offenbarenden deutschen Patentanmeldung DE 10 2018 004 677.0 aufgezeigt ist, ein auszuwechselnder Werkzeughalter in einer Arbeitsstation systemgesteuert freigegeben ist, gefahrlos durch Drehen der Werkzeugscheibe in eine gewünschte Wechselposition überzuführen, ohne dass der freigegebene Werkzeughalter hierbei von der Werkzeugscheibe abfällt.

Bei vorteilhaften Ausführungsbeispielen weist diese Festlegeeinrichtung für einen Halter mindestens einen Biegestab auf, der mit seinem einen freien Festlegeende am Halter festgelegt ist und im aufgesetzten Zustand mit seinem anderen freien Rastende einen Vorsprung im Hohlkanal des Stiftes untergreift, wobei der beide Hohlräume durchgreifende Biegestab, mittels einer Betätigungseinrichtung betätigt, mit seinem Rastende außer Eingriff mit dem Vorsprung des Stiftes kommt und der Halter, freigegeben von dem Revolver, abnehmbar ist.

Mit Vorteil kann die Anordnung hierbei so getroffen sein, dass die Betätigungseinrichtung einen Betätigungsstift aufweist, der im Halter quer zum Biegestab verschiebbar gelagert ist, mit seinem einen Ende an diesem angreift und dem von seinem anderen, von der Außenseite des Halters zugänglichen Ende her eine Verschiebebewegung vermittelbar ist, die das Rastende des Biegestabes in die freigebende Stellung bringt. Die Zugänglichkeit der Betätigung von außen her ermöglicht bei den maschinell mittels eines Handlingsystems durchzuführenden Wechselvorgängen die Betätigung der Festlegeeinrichtung mittels des Greifers am Roboterarm, der bei Ergreifen des freigegebenen Werkzeughalters den Betätigungsstift beaufschlagt und in die freigebende Position verschiebt.

Nachstehend ist die Erfindung von in der Zeichnung dargestellten Ausführungsbeispielen im Einzelnen erläutert. Es zeigen:
- Fig. 1: eine perspektivische Schrägansicht eines mit einem Ausführungsbeispiel der erfindungsgemäßen Positioniervorrichtung versehenen Werkzeugrevolvers, gesehen auf die Werkzeugscheibe;

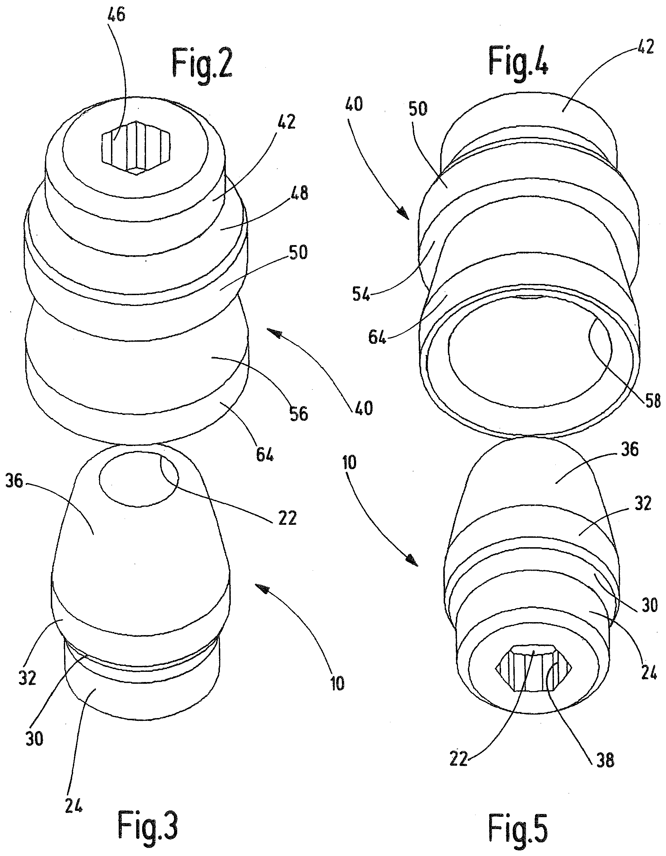

- Fig. 2: eine vergrößert gezeichnete perspektivische Schrägansicht einer Buchse des Ausführungsbeispiels, gesehen auf die Oberseite;
- Fig. 3: eine im Maßstab von Fig. 2 gezeichnete perspektivische Schrägansicht eines Positionierstifts des Ausführungsbeispiels, gesehen auf die Oberseite;
- Fig. 4: eine im gleichen Maßstab gezeichnete perspektivische Schrägansicht der Buchse von Fig. 2, gesehen auf die Unterseite;
- Fig. 5: eine im gleichen Maßstab gezeichnete perspektivische Schrägansicht des Positionierstifts von Fig. 3, gesehen auf die Unterseite;
- Fig. 6: einen in einer Radialebene geschnittenen Teilausschnitt eines Umfangsabschnitts der Werkzeugscheibe von Fig. 1, wobei von zwei nebeneinanderliegenden Arbeitsstationen je ein Positionierstift des Ausführungsbeispiels der Positioniereinrichtung gezeigt ist und wobei linksseitig ein zugeordneter Teilabschnitt eines Werkzeughalters vor dem Ansetzen und rechtsseitig ein solcher Abschnitt in eingesetzter Position gezeigt ist;
- Fig. 7: einen Querschnitt des Fußteils eines mit der erfindungsgemäßen Positioniervorrichtung auszurichtenden Werkzeughalters; und
- Fig. 8: einen in Radialebene geschnittenen Teilschnitt eines Umfangsabschnitts der Werkzeugscheibe und eines Teils eines daran mit einem zweiten Ausführungsbeispiel der erfindungsgemäßen Positioniervorrichtung ausgerichteten Werkzeughalters, versehen mit einer Festlegeeinrichtung.

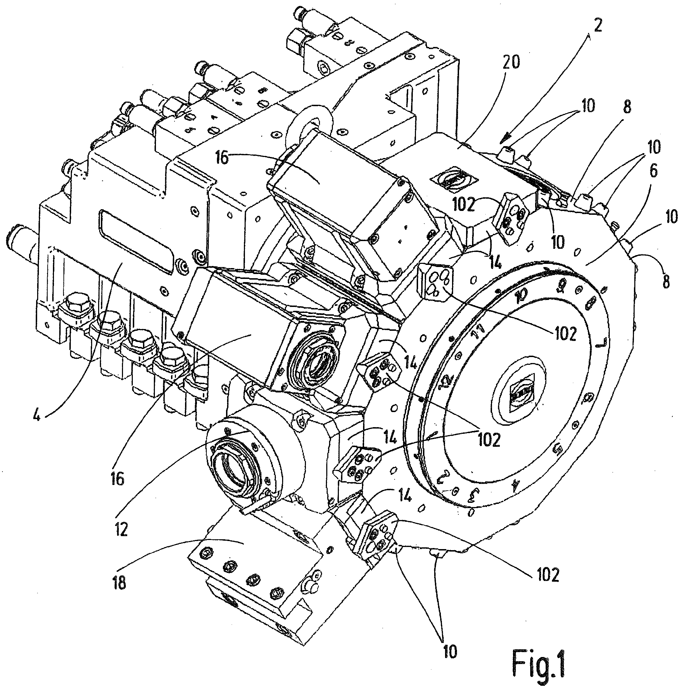

Der in Fig. 1 dargestellte Werkzeugrevolver 2 weist an einem Grundkörper 4 eine um eine Revolverachse schwenkbar gelagerte Werkzeugscheibe 6 auf, die in der bei derartigen Revolvern üblichen Weise an ihrem Außenumfang Arbeitsstationen, bei dem in der Figur gezeigten Beispiel 12 Arbeitsstationen, aufweist. Für die Festlegung von Werkzeughaltern ist an jeder Arbeitsstation eine Aufnahmefläche 8 (in Fig. 1 nur teilweise beziffert) ausgebildet, an denen in mittels Positionierstiften 10 ausgerichteter Lage Werkzeughalter mit zugehörigem Fußteil 14 festlegbar sind. Bei der Darstellung von Fig. 1 ist lediglich ein Teil der Arbeitsstationen mit Werkzeughaltern bestückt. Außer einem Werkzeughalter 12, der für ein angetriebenes Werkzeug mit gerader Antriebsachse ausgelegt ist, sind in Fig. 1 Werkzeughalter 16 für angetriebene Werkzeuge mit Winkeltrieb, ein Werkzeughalter 18 für ein statisches Werkzeug, wie einen Drehmeißel, sowie eine Abdeckung 20 gezeigt, die durch ein Fußteil 14 ohne zugehörigen Werkzeughalterteil gebildet ist. Die Abdeckung 20 ist als Schutzelement an einer leeren Arbeitsstation in mittels der erfindungsgemäßen Positioniervorrichtung vorgegebener Lageausrichtung an der betreffenden Aufnahmefläche 8 des Werkzeugrevolvers in gleicher Weise wie die Fußteile 14 der Werkzeughalter 12, 16, 18 fixierbar oder freigebbar, wobei die Festlegeeinrichtung systemgesteuert vom Werkzeugantrieb der Werkzeugscheibe 6 betätigt sein kann, wie es in der einen nachveröffentlichten Stand der Technik offenbarenden Patentanmeldung DE 10 2018 004 677.0 gezeigt ist.

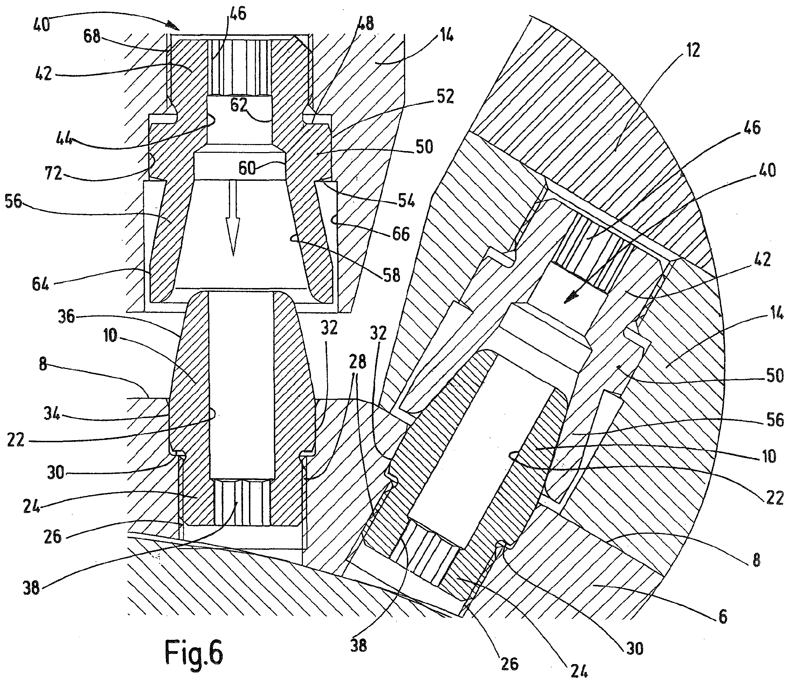

Die Positionierstifte 10 sind einteilige Rotationskörper mit einem inneren, koaxial durchgehenden Hohlkanal 22. An ihrem Befestigungsende weisen die Positionierstifte 10 einen Gewindeabschnitt 24 auf, mit dem sie mit einem Innengewinde 26 in einer Aufnahmebohrung 28 in der Aufnahmefläche 8 der zugehörigen Arbeitsstation der Werkzeugscheibe 6 verschraubbar sind. Am Ende des Gewindeabschnitts 24, dessen Länge etwa ein Drittel der Gesamtlänge des Positionierstifts 10 beträgt, geht der Außendurchmesser des Gewindestifts 10 an einer Stufe 30 in einen im Durchmesser erweiterten Kreiszylinderteil 32 über, für den in der Aufnahmebohrung 28 zwischen Innengewinde 26 und Bohrungsende ein Bohrungsabschnitt 34 einen passgenauen Sitz bildet. Bei eingeschraubter Position, wobei die Stufe 30 an dem zwischen Zylinderteil 32 und Innengewinde 26 gebildeten Absatz anliegt (Fig. 6), steht der Positionierstift 10 mit etwa der Hälfte seiner Gesamtlänge über die Aufnahmefläche 8 vor. In diesem aus der Aufnahmefläche 8 herausragenden Teil ist der Positionierstift 10 an seiner Außenumfangsfläche 36 mit leicht konvex gekrümmter Form ballig geschliffen. Vervollständigt ist der Positionierstift 10 durch einen am Befestigungsende im Hohlkanal 22 innerhalb des Gewindeabschnitts 24 ausgebildeten Innensechskant 38 als Angriffsstelle für ein zur Bildung der Verschraubung ansetzbares Werkzeug.

Als dem Fußteil 14 der Werkzeughalter 12, 16, 18 oder der Abdeckung 20 zugeordnetes Ausrichtteil ist eine Buchse 40 vorgesehen, die, wie die Positionierstifte 10, durch einen einteiligen Rotationskörper gebildet ist, der als Einschraubteil einen Außengewindeabschnitt 42 aufweist, der, vom Ende des Außengewindeabschnitts 42 ausgehend, sich etwa über ein Viertel der Gesamtlänge der Buchse 40 erstreckt und mit einem Innengewinde 68 in einer Aufnahmebohrung 66 des betreffenden Fußteils 14 verschraubbar ist. Wie die Positionierstifte 10 weist die Buchse 40 einen inneren, durchgehenden, koaxialen Hohlkanal 44, s. Fig. 6, auf, in dessen innerhalb des Gewindeabschnitts 42 liegendem Endteil sich ein Innensechskant 46 für ein zur Bildung der Verschraubung ansetzbares Betätigungswerkzeug befindet. An einer Schulter 48 erweitert sich der Außendurchmesser der Buchse 40 durch einen Bund 50 mit einem eine Passfläche 52 bildenden Außenumfang. Anschließend an den Bund 50, und über eine weitere Schulter 54 radial nach innen versetzt, setzt sich die Buchse 40 mit einem Aufspreizteil 56 zum Ende hin fort. Die axiale Länge des Aufspreizteils 56 beträgt etwas weniger als die Hälfte der Gesamtlänge der Buchse 40. Die Wandstärke der Buchse 40 im Bereich ihres Aufspreizteils 56 beträgt etwa die Hälfte der Wandstärke des Bundes 50, so dass das Aufspreizteil 56 durch einwirkende Radialkräfte aufweitbar ist. Wie am deutlichsten der Fig.6 entnehmbar ist, in der im rechtsseitig gelegenen Zeichnungsteil nicht sämtliche Elemente beziffert sind, geht die Wand des Aufspreizteils 56 von einer an der Schulter 54 von einer gegenüber dem Bund 50 radial nach innen versetzten Stelle aus, von wo aus die Wand des Aufspreizteils 56 zum Ende hin divergierend verläuft und wobei die Innenumfangsfläche 58 einen Konus bildet, mit dem sich der Hohlkanal 44 trichterartig zum Ende hin erweitert, durch das der zugeordnete Passstift 10 einsetzbar ist. In dem zwischen dem Konus und dem mit dem Innensechskant 46 versehenen Ende verringert sich der Innendurchmesser des Hohlkanals in zwei Stufen mit zylindrischen Bohrungsabschnitten 60 und 62. An der Außenseite weist das Aufspreizteil 56 am Ende des Außenkonus ein zylindrisches Endteil 64 auf. Bei in das Fußteil 14 eingeschraubter Buchse 40, wie in Fig. 6 gezeigt, befindet sich der Endteil 64 in einem radialen Abstand von der umfassenden Wand der im Fußteil 14 für die Buchse 40 gebildeten Aufnahmebohrung 66.

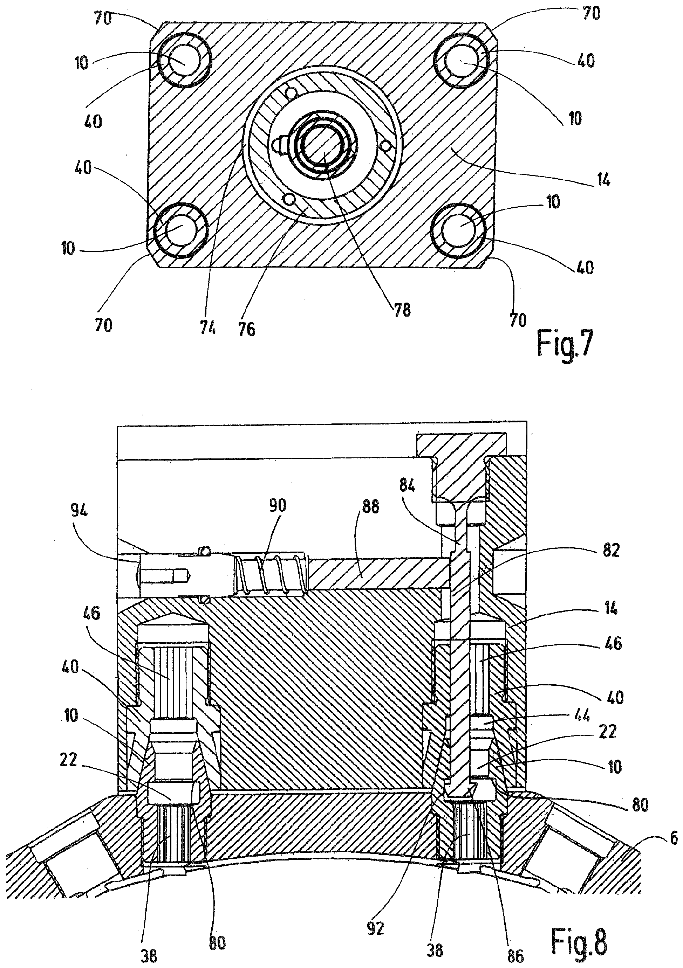

Die Fig. 6 zeigt in der rechts gelegenen Figurenhälfte einen Teilabschnitt einer Arbeitsstation und den Teil eines Werkzeughalters 12, der mit seinem Fußteil 14 an der Aufnahmefläche 80 gelegt und mittels der erfindungsgemäßen Positioniervorrichtung ausgerichtet ist. Von den der Arbeitsstation zugehörigen Positionierstiften 10 ist in der Teildarstellung der Figur ein einzelner in der in das Aufspreizteil 56 der zugeordneten Buchse 40 eingezogenen Positionierstellung gezeigt. Der linksseitig gelegene Figurenteil der Fig. 6 zeigt die Position des Fußteils 14 vor dem Ansetzen an die Werkzeugscheibe 6 für den Aushebevorgang mit dem zugeordneten Positionierstift 10. Wie gezeigt, ist am Ende der mit konvexer Krümmung ballig verlaufenden Umfangsfläche 36 der Außendurchmesser des Positionierstifts 10 geringer als der Durchmesser der Öffnung des sich mit konischer Innenumfangsfläche 58 erweiternden Aufspreizteils 56. Durch den so gebildeten Einfahrtrichter ist daher selbst bei Lagetoleranzen ein betriebssicheres Einfahren des Positionierstifts 10 in das Aufspreizteil 56 ermöglicht, weil der Flächenkontakt erst innerhalb des Aufspreizteils 56 erfolgt. Eventuelle Lagetoleranzen werden beim Einziehvorgang durch den Flächenkontakt zwischen Umfangsfläche 36 des Stifts 10 und der Innenumfangsfläche 58 des Aufspreizteils 56 eliminiert, so dass die passgenaue Ausrichtung zustande kommt. Dadurch, dass das Aufspreizteil 56 elastisch aufweitbar ist und dass die Außenwand des Aufspreizteils 56, ausgehend von der an der Schulter 54 radial nach innen versetzten Ausgangsstelle, bis zum Endteil 64 sich in einem radialen Abstand von der umgebenden Wand der Aufnahmebohrung 66 befindet, steht ein Freiraum für ein Verformen zur Verfügung. Ohne Beeinträchtigung der passgenauen Positionierung vermeidet eine derartige, gewisse Nachgiebigkeit die Probleme, wie sie bekanntermaßen bei Vorhandensein mehrerer Passstellen durch statische Überbestimmung auftreten. Mit Vorteil können daher an den Arbeitsstationen der Werkzeugscheibe vier Positionierstifte 10 vorgesehen sein, die mit Buchsen 40 zusammenwirken, die, wie in Fig. 7 gezeigt, in Eckbereichen des betreffenden, rechteckförmigen Fußteils 14 angeordnet sind. Bei dem unterschiedlichen Verlauf der bei der Einziehposition zusammenwirkenden Flächen, beim gezeigten Beispiel der konischen Innenumfangsfläche 58 der Buchse 40 und der konvex balligen Umfangsfläche 36 des Stifts 10, sind die Kontaktflächen bei der Einsetzposition nicht in gleichmäßiger vollflächiger Anlage, sondern der Kontakt entspricht eher einer Linienberührung.

Die Fig. 7 zeigt die Anordnung je einer Buchse 40 in jedem der vier Eckbereiche 70 des im Umriss rechteckförmigen Fußteils 14 eines betreffenden Werkzeughalters, der für ein rotatorisch angetriebenes Werkzeug vorgesehen ist. Für den Durchtritt des zugehörigen Spindeltriebes weist der Fußteil 14 eine zentral gelegene Durchgriffsöffnung 74 für Schaft 76 und Welle 78 des betreffenden Spindeltriebes auf.

Die Fig. 8 zeigt ein abgewandeltes Ausführungsbeispiel, bei dem der innere Hohlkanal 22 des jeweiligen Positionierstifts 10 anschließend an den Innensechskant 38 keinen glatten Innenzylinder bildet, wie bei dem ersten Ausführungsbeispiel, sondern einen radial nach innen vorstehenden Rastvorsprung 80 aufweist. Dieser bildet den Bestandteil einer zusätzlichen Festlegeeinrichtung, die einen Fußteil 14, der sich an der Werkzeugscheibe 6 in mittels der Positioniervorrichtung ausgerichteter Lage befindet, auch dann an der Werkzeugscheibe 6 sichert, wenn die revolverseitige Festlegeeinrichtung diesen Fußteil 14 freigegeben hat. Diese sichernde Festlegeeinrichtung weist einen Biegestab 82 auf, der an einem Endbereich über eine Biegestelle 84 am Fußteil 14 befestigt ist und sich von der Biegestelle 84 ausgehend durch beide Hohlräume 44 und 22 eines zusammenwirkenden Paares aus Buchse 40 und Positionierstift 10 erstreckt. An seinem freien Ende 86 besitzt der Biegestab 82 einen Rasthaken 92, der durch Rasteingriff am Vorsprung 80 des Stifts 10 den Fußteil 14 an der Werkzeugscheibe 6 sichert. Um den Rasteingriff zu lösen, ist im Fußteil 14 ein Betätigungsstift 88 vorgesehen, der im Fußteil 14 quer zum Biegestab 82 verschiebbar gelagert und gegen die Kraft einer Rückstellfeder 90 derart verschiebbar ist, dass er mit einem freien Ende den Biegestab 82 in der Nähe der Biegestelle 84 mit Biegekraft beaufschlagt und dadurch den Rasthaken 92 außer Eingriff mit dem Vorsprung 80 bringt, so dass der Fußteil 14 zur Abnahme freigegeben ist. Das vom Biegestab 82 abgewandte Ende 94 des Betätigungsstifts 88 ist von der Außenseite des Fußteils 14 her zugänglich, so dass die zusätzliche Festlegeeinrichtung durch ein von außen her auf den Betätigungsstift 88 einwirkendes Steuerteil entsperrbar ist.

## Patentansprüche

1. Positioniervorrichtung zum Positionieren eines Werkzeughalters (12, 14, 16, 18) an einem Werkzeugrevolver (6) einer Werkzeugmaschine mittels Positionierstiften (10), die am Werkzeugrevolver (6) festgelegt sind und die bei auf dem Werkzeugrevolver (6) aufgesetztem Werkzeughalter (12, 14, 16, 18) in Aufnahmen (40) am Werkzeughalter (6) eingreifen, wobei mindestens eine der Aufnahmen des Werkzeughalters (6) aus einer Buchse (40) gebildet ist, in die im aufgesetzten Zustand der zuordenbare Positionierstift (10) unter Anlage mit der Innenumfangsfläche (58) der Buchse (40) eingreift, und dass die Innenumfangsfläche (58) Teil eines Aufspreizteils (56) ist, das bei Eingriff des Stifts (10) sich von dem Stift (10) weg elastisch rückfedernd aufweitet, **dadurch gekennzeichnet, dass** sowohl der Stift (10) als auch die Buchse (40)
- in dem Revolver (6) bzw. in dem Halter (12, 14, 16, 18) durch jeweils eine Schraubverbindung (24, 42) festgelegt sind,
- einen durchgehenden Hohlkanal (22, 44) aufweisen, in dem eine Angriffsstelle (38, 46) für ein Betätigungswerkzeug angeordnet ist, und
- sich über ein ringförmiges Abstützteil (30, 50) außerhalb der Schraubverbindung (24, 42) an dem Revolver (6) bzw. an dem Halter (12, 14, 16, 18) abstützen.

2. Positioniervorrichtung nach Anspruch 1, **dadurch gekennzeichnet, dass** der Stift (10), soweit er aus dem Revolver (6) herausragt, zumindest teilweise derart eine von der Innenumfangsfläche (58) der Buchse (40) verschiedene Außenumfangsfläche (36) aufweist, dass im aufgesetzten Zustand nur teilweise eine Berührung, vorzugsweise in der Art einer Linienberührung, zwischen den Flächen (36, 58) zustande kommt.

3. Positioniervorrichtung nach Anspruch 1 oder 2, **dadurch gekennzeichnet, dass** die Außenumfangsfläche (36) des Stiftes (10) zumindest teilweise konvex oder konisch und die Innenumfangsfläche (58) der Buchse (40) zumindest im Bereich der Berührung konisch bzw. konkav ausgeführt ist.

4. Positioniervorrichtung nach einem der vorstehenden Ansprüche, **dadurch gekennzeichnet, dass** der Innenumfang der Buchse (40) sich im aufgesetzten Zustand in Richtung zur Umgebung hin konisch erweitert und dass das Aufspreizteil (56) der Buchse (40) außenumfangsseitig unter Beibehalten eines radialen Abstands von einer Ausnehmung (66) im Halter (12, 14, 16, 18) umfasst ist, die von der Buchse (40) durchgriffen ist.

5. Positioniervorrichtung nach einem der vorstehenden Ansprüche, **dadurch gekennzeichnet, dass** der Halter (12, 14, 16, 18), mit rechteckförmigem Querschnitt versehen, an seinen Eckbereichen (70) jeweils eine Buchse (40) aufweist, denen am Revolver (6) passgenau an einer vorzugsweise normierten Schnittstelle vier Stifte (10) zugeordnet sind, und dass der Halter (12, 14, 16) und die Schnittstelle einen Durchgriff (74) für den Durchtritt einer Antriebswelle (78) eines antreibbaren Bearbeitungswerkzeugs vorsehen, das mittels des Halters (12, 14, 16) am Revolver (6) festlegbar ist.

6. Positioniervorrichtung nach einem der vorstehenden Ansprüche, **dadurch gekennzeichnet, dass** mittels einer lösbaren Festlegeeinrichtung (82) der Halter (12, 14, 16, 18) auch dann noch an dem Revolver (6) verbleibt, wenn eine Kupplungsvorrichtung in dem Revolver (6) für einen Werkzeugwechselvorgang diese den Halter (12, 14, 16, 18) freigegeben hat.

7. Positioniervorrichtung nach Anspruch 6, **dadurch gekennzeichnet, dass** die Festlegeeinrichtung für einen Halter (12, 14, 16, 18) mindestens einen Biegestab (82) aufweist, der mit seinem einen freien Festlegeende am Halter (12, 14, 16, 18) festgelegt ist und im aufgesetzten Zustand mit seinem anderen freien Rastende (86, 92) einen Vorsprung (80) im Hohlkanal (22) des Stiftes (10) untergreift, und dass der beide Hohlräume (22, 44) durchgreifende Biegestab (82), mittels einer Betätigungseinrichtung (88) betätigt, mit seinem Rastende (86, 92) außer Eingriff mit dem Vorsprung (80) des Stiftes (10) kommt und der Halter (12, 14, 16, 18), freigegeben von dem Revolver (6), abnehmbar ist.

8. Positioniervorrichtung nach Anspruch 7, **dadurch gekennzeichnet, dass** die Betätigungseinrichtung einen Betätigungsstift (88) aufweist, der im Halter (12, 14, 16, 18) quer zum Biegestab (82) verschiebbar gelagert ist, mit seinem einen Ende an diesem angreift und dem von seinem anderen, von der Außenseite des Halters zugänglichen Ende (94) her eine Verschiebebewegung vermittelbar ist, die das Rastende (86, 92) des Biegestabes (82) in die freigebende Stellung bringt.

## Claims

1. Positioning device for positioning a tool holder (12, 14, 16, 18) on a tool turret (6) of a machine tool by means of positioning pins (10), which are fixed to the tool turret (6) and which engage in mounts (40) on the tool holder (6) when the tool holder (12, 14, 16, 18) is placed on the tool turret (6), at least one of the mounts of the tool holder (6) being formed by a bushing (40), into which, in the mounted state, the assignable positioning pin (10) engages in contact with the inner circumferential surface (58) of the bushing (40), and the inner circumferential surface (58) is part of an expanding part (56) which widens in an elastically resilient manner away from the pin (10) when the pin (10) is engaged, **characterised in that** both the pin (10) and the bushing (40)
- are fixed in the turret (6) or in the holder (12, 14, 16, 18) respectively by means of a screw connection (24, 42) in each case,
- have a hollow through channel (22, 44), in which an engagement point (38, 46) for an actuating tool is arranged, and
- are supported via an annular support part (30, 50) outside the screw connection (24, 42) on the turret (6) or on the holder (12, 14, 16, 18) respectively.

2. Positioning device according to claim 1, **characterised in that** the pin (10), insofar as it protrudes from the turret (6), at least partially has an outer circumferential surface (36) that is different from the inner circumferential surface (58) of the bushing (40) in such a manner that, in the mounted state, contact, preferably in the form of linear contact, only partially arises between the surfaces (36, 58).

3. Positioning device according to either claim 1 or claim 2, **characterised in that** the outer circumferential surface (36) of the pin (10) is configured to be at least partially convex or conical and the inner circumferential surface (58) of the bushing (40) is configured to be conical or concave respectively at least in the region of contact.

4. Positioning device according to any of the preceding claims, **characterised in that** the inner circumference of the bushing (40) widens conically towards the surrounding area in the mounted state and **in that** the expanding part (56) of the bushing (40) is surrounded on the outer circumferential side by a recess (66) in the holder (12, 14, 16, 18), while retaining a radial distance therefrom, said recess being penetrated by the bushing (40).

5. Positioning device according to any of the preceding claims, **characterised in that** the holder (12, 14, 16, 18) is furnished with a rectangular cross-section, and has a bushing (40) at each of its corner regions (70), to which four pins (10) are assigned in a precision-fitting manner on the turret (6) at a preferably standardised interface, and **in that** the holder (12, 14, 16) and the interface provide a through passage (74) to allow a drive shaft (78) of a drivable machining tool to pass through, said tool being able to be fixed to the turret (6) by means of the holder (12, 14, 16).

6. Positioning device according to any of the preceding claims, **characterised in that**, by means of a detachable fixing apparatus (82), the holder (12, 14, 16, 18) still remains on the turret (6) even if a coupling device in the turret (6) has released the holder (12, 14, 16, 18) for a tool change operation.

7. Positioning device according to claim 6, **characterised in that** the fixing apparatus (82) for a holder (12, 14, 16, 18) has at least one bending rod, which is fixed on the holder (12, 14, 16, 18) with its one free fixing end and, in the mounted state, engages beneath a protrusion (80) in the hollow channel (22) of the pin (10) with its other free latching end (86, 92), and **in that** the bending rod (82) passing through two hollow cavities (22, 44) is actuated by means of an actuating apparatus (88), disengages from the protrusion (80) of the pin (10) with its latching end (86, 92) and the holder (12, 14, 16, 18), which is released from the turret (6), can be removed.

8. Positioning device according to claim 7, **characterised in that** the actuating apparatus has an actuating pin (88), which is displaceably mounted in the holder (12, 14, 16, 18) transversely in relation to the bending rod (82), engages on said rod with one end and to which a displacement movement can be transmitted from its other end (94), which is accessible from the outside of the holder, said movement bringing the latching end (86, 92) of the bending rod (82) into the releasing position.

## Revendications

1. Dispositif de mise en position pour la mise en position d'un porte-outil (12, 14, 16, 18) sur une tourelle (6) révolver d'outil d'une machine-outil au moyen de broches (10) de mise en position, qui sont fixées à la tourelle (6) révolver d'outil et qui, lorsque le porte-outil (12, 14, 16, 18) est mis sur la tourelle (6) révolver d'outil, pénètrent dans des logements (40) du porte-outil (6), dans lequel au moins l'un des logements du porte-outil (6) est formé d'un manchon (40), dans lequel, à l'état posé, la broche (10) de mise en position pouvant être associée pénètre avec contact avec la surface (58) périphérique intérieure du manchon (40), et en ce que la surface (58) périphérique intérieure fait partie d'une pièce (56) d'extension, qui s'élargit, avec rappel par ressort, élastiquement de la broche (10), lors de la pénétration de la broche (10), **caractérisé en ce que** tant la broche (10) qu'également le manchon (40)
- sont fixés dans la tourelle (6) révolver ou dans le porte-outil (12, 14, 16, 18) par respectivement un vissage (24, 42),
- ont un conduit (22, 44) creux continu, dans lequel est disposé un point (38, 46) d'attaque pour un outil d'actionnement, et
- s'appuient, par une partie (30, 50) annulaire d'appui, à l'extérieur du vissage (24, 42), sur la tourelle (6) révolver ou respectivement sur le porte-outil (12, 14, 16, 18).

2. Dispositif de mise en position suivant la revendication 1, **caractérisé en ce que** la broche (10), pour autant qu'elle est en saillie de la tourelle (6) révolver, a au moins en partie une surface (36) périphérique extérieure différente de la surface (58) périphérique intérieure du manchon (40), **en ce que**, dans l'état posé, n'a lieu que partiellement un contact, de préférence à la manière d'un contact linéaire entre les surfaces (36, 58).

3. Dispositif de mise en position suivant la revendication 1 ou 2, **caractérisé en ce que** la surface (36) périphérique extérieure de la broche (10) est réalisée au moins en partie de manière convexe ou conique et la surface (58) périphérique intérieure du manchon (40) est réalisée conique ou respectivement concave dans la partie du contact.

4. Dispositif de mise en position suivant l'une des revendications précédentes, **caractérisé en ce que** le pourtour intérieur du manchon (40) s'élargit coniquement dans l'état monté dans la direction de l'environnement, et **en ce que** la pièce (56) d'extension du manchon (40) est, du côté périphérique extérieur, entourée en conservant une distance radiale à un évidement (66) dans le porte-outil (12, 14, 16, 18), évidement dans lequel passe le manchon (40).

5. Dispositif de mise en position suivant l'une des revendications précédentes, **caractérisé en ce que** le porte-outil (12, 14, 16, 18), pourvu d'une section transversale rectangulaire, a, à ses parties (70) de coin, respectivement un manchon (40), auquel sont affectées, sur la tourelle (6) révolver, à une interface, de préférence normée, quatre broches (10), et **en ce que** le porte-outil (12, 14, 16) et l'interface prévoient un passage (74) pour la traversée d'un arbre (78) d'entraînement d'un outil d'usinage pouvant être entraîné, qui peut être fixé à la tourelle (6) révolver au moyen du porte-outil (12, 14, 16).

6. Dispositif de mise en position suivant l'une des revendications précédentes, **caractérisé en ce que**, au moyen d'un dispositif (82) de fixation amovible, le porte-outil (12, 14, 16, 18) reste sur la tourelle (6) révolver, même après qu'un dispositif d'accouplement dans la tourelle (6) révolver pour une opération d'échange d'outil a libéré le porte-outil (12, 14, 16, 18).

7. Dispositif de mise en position suivant la revendication 6, **caractérisé en ce que** le dispositif de fixation d'un porte-outil (12, 14, 16, 18) a au moins une barre (82) de flexion, qui est fixée au porte-outil (12, 14, 16, 18) par l'une de ses extrémités libres de fixation et qui, dans l'état posé, s'accroche par son autre extrémité (86, 92) libre d'encliquetage à une saillie (80) dans le conduit (22) creux de la broche (10), et **en ce que** la barre (82) de flexion, traversant les deux espaces (22, 44) vides, actionne au moins un dispositif (88) d'actionnement, vient, par son extrémité (86, 92) d'encliquetage, hors de prise avec la saillie (80) de la broche (10) et le porte-outil (12, 14, 16, 18), libéré de la tourelle (6) révolver, peut être retiré.

8. Dispositif de mise en position suivant la revendication 7, **caractérisé en ce que** le dispositif d'actionnement a une broche (88) d'actionnement, qui est montée coulissante dans le porte-outil (12, 14, 16, 18) transversalement à la barre (82) de flexion, qui attaque celle-ci par l'une de ses extrémités et qui, par son autre extrémité (94) accessible du côté extérieur du porte-outil, peut donner un mouvement de coulissement, qui met l'extrémité (86, 92) d'encliquetage de la barre (82) de flexion dans la position de libération.
